(19) Europäisches Patentamt
European Patent Office
Office européen des brevets

(11) Veröffentlichungsnummer : **0 132 517**
**B1**

(12) # EUROPÄISCHE PATENTSCHRIFT

(45) Veröffentlichungstag der Patentschrift : **30.12.86**

(51) Int. Cl.[4] : **C 08 G 18/80**, C 08 G 18/73, C 09 D 3/72, C 08 G 18/42

(21) Anmeldenummer : **84104850.7**

(22) Anmeldetag : **30.04.84**

(54) **Einkomponenten-Einbrennlacke.**

(30) Priorität : **24.06.83 DE 3322722**

(43) Veröffentlichungstag der Anmeldung : **13.02.85 Patentblatt 85/07**

(45) Bekanntmachung des Hinweises auf die Patenterteilung : **30.12.86 Patentblatt 86/52**

(84) Benannte Vertragsstaaten : **AT BE CH DE FR GB IT LI NL SE**

(56) Entgegenhaltungen :
**EP-A- 0 000 607**
**DE-B- 2 346 818**
**US-A- 3 631 198**
**Die Akte enthält technische Angaben, die nach dem Eingang der Anmeldung eingereicht wurden und die nicht in dieser Patentschrift enthalten sind.**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Gras, Rainer, Dr.**
**Im Ostholz 49a**
**D-4630 Bochum 5 (DE)**

**EP 0 132 517 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft lösungsmittelhaltige Polyurethan-Einkomponenten-Einbrennlacke bestehend aus ganz oder partiell mit ε-Caprolactam oder Acetonoxim blockiertem 2-Methyl-1,5-diisocyanatopentan (MPDI) oder einem Gemisch aus MPDI und 2-Ethyl-1,4-diisocyanatobutan (EBDI) sowie aus hydroxylgruppenhaltigen Polyestern auf Basis von überwiegend aromatischen Dicarbonsäuren und Diolen und Triolen sowie gegebenenfalls üblichen Zuschlagstoffen.

Zur Herstellung von bei gewöhnlicher Temperatur haltbaren Mischungen aus Polyisocyanaten und Polyoxyverbindungen verwendet man bekanntlich Polyisocyanate, deren reaktionsfähige Gruppen durch Umsetzung mit monofunktionellen Verbindungen verschlossen sind und allgemein als verkappte oder blockierte Polyisocyanate bezeichnet werden. Derartige Produkte werden beispielsweise in den Annalen, Band 562 (1949), Seiten 205 bis 229, beschrieben.

Durch Einwirkung höherer Temperaturen spalten sie wieder in ihre Ausgangskomponenten zurück, wobei die nun freiwerdenden Isocyanatgruppen ihrerseits mit den in der Reaktionsmischung vorliegenden Polyoxyverbindungen reagieren können.

Sollen diese Mischungen aus blockierten Polyisocyanaten und Polyoxyverbindungen zur Beschichtung von Gegenständen im Spritz- oder Gießverfahren sowie zur Beschichtung von Blechen mit Hilfe der Walzenlackierung, speziell nach dem Coil-Coating-Verfahren, appliziert werden, müssen sowohl der Vernetzer als auch das Harz in den üblichen Lacklösungsmitteln löslich und auch lagerstabil sein.

Mit nur wenigen Ausnahmen sind mit ε-Caprolactam- oder mit Acetonoxim-blockierte aliphatische Polyisocyanate in den lacküblichen Lösungsmitteln unverträglich. Sie scheiden daher als Ausgangskomponente für die Herstellung von PUR-Einkomponenten-Einbrennlacken zum Überziehen von vorzugsweise metallischen Gegenständen mit hochverformbaren Beschichtungen aus.

Bereits die Herstellung von mit ε-Caprolactam- oder Acetonoxim-blockiertem Hexamethylendiisocyanat (HDI) in lacküblichen Lösungsmitteln scheitert an der Unverträglichkeit; diese Produkte fallen schon während bzw. kurze Zeit nach der Umsetzung aus. Selbst die partielle Blockierung von HDI und anschließende Umsetzung mit den Polyoxyverbindungen vermag den Lacklösungen nur eine kurzzeitige Lagerstabilität zu verleihen. Ein weiterer Nachteil liegt in der begrenzten Thermo- und Oxidationsstabilität, die sich in praxi bei einem Bandstillstand während der Härtung als ausgesprochen störend erweist; Qualitätseinbußen, wie z. B. Verfärbung der Lackfilme, sind die Folge.

Es wurde nun überraschenderweise gefunden, daß diese Nachteile vermieden werden können, wenn als Polyisocyanatkomponente ganz oder teilweise ε-Caprolactam- oder Acetonoxim-blockiertes MPDI oder das Gemisch aus MPDI und EBDI, gemäß der Formeln I und II

$$O{=}C{=}N{-}CH_2{-}\underset{\displaystyle CH_3}{\underset{|}{CH}}{-}CH_2{-}CH_2{-}CH_2{-}N{=}C{=}O \qquad (MPDI) \qquad (I)$$

$$O{=}C{=}N{-}CH_2{-}CH_2{-}\underset{\displaystyle C_2H_5}{\underset{|}{CH}}{-}CH_2{-}N{=}C{=}O \qquad (EBDI) \qquad (II)$$

eingesetzt wird, wobei das Diisocyanat-Gemisch folgende Zusammensetzung aufweist:

88 bis 99 Gew.-% 2-Methyl-1,5-diisocyanatopentan (MPDI)
12 bis 1 Gew.-% 2-Ethyl-1,4-diisocyanatobutan (EBDI)

und der freie NCO-Gehalt bis 10 Gewichtsprozent, vorzugsweise bis 5 Gewichtsprozent beträgt, in Verbindung mit hydroxylgruppenhaltigen Polyestern auf Basis von überwiegend aromatischen Dicarbonsäuren, Diolen und Triolen, wobei vorzugsweise die Diole Neopentylglykol und/oder Hydroxypivalinsäureneopentylglykolester als Hartsegment eingebaut sind.

Derartige Gemische werden in lacküblichen Lösungsmitteln, gegebenenfalls unter Zumischung der in der PUR-Chemie üblichen Zusätze, gelöst, nach den üblichen Verfahren auf die zu beschichtenden Gegenstände appliziert und durch thermische Behandlung zwischen 120 und 350 °C, vorzugsweise zwischen 140 und 300 °C ausgehärtet. Das Mischungsverhältnis der Bindemittelkomponenten läßt sich in weiten Grenzen verändern. Die besten lacktechnischen Kenndaten werden erzielt, wenn das Bindemittelgemisch aus 50 bis 90 Gewichtsprozent des Polyesters und aus 50 bis 10 Gewichtsprozent des Vernetzers besteht, wobei das OH/NCO-Verhältnis von 1 : 0,8 bis 1 : 1,2, vorzugsweise 1 : 0,95 bis 1 : 1,1, variiert werden kann. Besonders empfehlenswert ist, pro OH-Äquivalent der Polyhydroxylverbindung ein Äquivalent NCO des Vernetzers einzusetzen.

Zur Herstellung der erfindungsgemäßen Vernetzer setzt man zu dem auf 80 bis 120 °C erhitzen Polyisocyanat (MPDI oder Gemisch aus MPDI/EBDI) das Blockierungsmittel portionsweise so zu, daß die Reaktionstemperatur 120 bzw. 110 °C nicht übersteigt. Nach beendeter Zugabe des Blockierungsmittels

wird zur Vervollständigung der Reaktion noch weitere 1 bis 2 Stunden bei 120 bzw. 100 °C erhitzt. Durch titrimetrische NCO-Bestimmung wird die Reaktion kontrolliert.

Die Blockierung kann sowohl in Substanz als auch gegebenenfalls in einem inerten organischen Lösungsmittel durchgeführt werden. Es empfiehlt sich, für die jeweilige Lackformulierung bzw. Anwendung, und damit auch den Härtungsbedingungen angepaßte, erforderliche lackübliche Lösungsmittel zu verwenden.

Die erfindungsgemäß zu verwendenden hydroxylgruppenhaltigen Polyester müssen einen niedrigen Glasumwandlungspunkt besitzen, er soll < 20 und > — 25 °C liegen. Wesentliche Bestandteile der Polyester sind :

1. Cyclische Polycarbonsäuren und ihre Ester und Anhydride, z. B. Phthal-, Isophthal-, Terephthalsäure, Benzoltricarbonsäuren, Trimellithsäureanhydrid, Dimethylterephthalat (DMT) und ihre Hydrierungsprodukte.

2. Diole, z. B. Ethylenglykol, 1,2-Propandiol, 1,2- oder 1,3- oder 1,4-Butandiol, 3-Methyl-pentandiol-1,5, Hexandiol-1,6, Cyclohexandiol, 4,4'-Dihydroxydicyclohexylpropan-2,2, 1,4-Dihydroxymethylcyclohexan, Diethylenglykol, Triethylenglykol, vorzugsweise Hydroxypivalinsäureneopentylglykolester oder Neopentylglykol.

3. Polyole, wie Glyzerin, Hexantriol, Pentaerythrit, Trimethylolpropan (TMP), Trimethylolethan.

Anteilmäßig können die Polyester auch monofunktionelle Carbonsäuren, z. B. Benzoesäure sowie acyclische Polycarbonsäuren, wie Adipinsäure, 2,2,4-(2,4,4)-Trimethyladipinsäure, Sebacin- oder Dodecandicarbonsäure enthalten. Die Polyester werden in an sich bekannter Weise durch Verestern oder Umestern, gegebenenfalls in Gegenwart üblicher Katalysatoren, hergestellt, wobei durch geeignete Wahl des COOH/OH-Verhältnisses Endprodukte erhalten werden, deren Hydroxylzahl zwischen 30 und 300, bevorzugt zwischen 70 und 150 mg KOH/g liegt.

Für die erfindungsgemäßen Einkomponenten-Einbrennlacke geeignete Lösungsmittel sind solche, deren unterer Siedepunkt bei etwa 100 °C liegt. Die obere Grenze des Siedepunktes des Lösungsmittels ist von den jeweiligen Einbrennbedingungen abhängig. Wenn man bei höheren Temperaturen einbrennt, müssen auch die Siedepunkte der zu verwendenden Lösungsmittel bei höheren Temperaturen liegen. Als Lösungsmittel kommen unter anderen folgende infrage :

Kohlenwasserstoffe, wie z. B. Toluol, Xylol, Solvesso® 150 oder 200 (Aromatengemisch der Fa. ESSO), Tetralin. Ester, wie z. B. Essigsäurebutylester, -n-hexylester, Ethylenglykolacetat (EGA), Butylglykolacetat usw. Ketone, wie z. B. Methylisobutylketon, Diisobutylketon, Isophoron. Die genannten Lösungsmittel können auch als Gemische eingesetzt werden.

Die Konzentration des Harz (Polyester)/Vernetzer (Härter)-Gemisches (Bindemittel) in den oben genannten Lösungsmitteln liegt zwischen 40 und 80 Gewichtsprozent.

Die erfindungsgemäßen Polyurethan-Einkomponenten-Einbrennlacke werden bei Verwendung der total blockierten Vernetzer durch Vermischen mit der Polyesterkomponente hergestellt, während beim Einsatz der partiell blockierten Vernetzer die NCO- mit den OH-Gruppen, gegebenenfalls in Kombination mit in der PUR-Chemie üblichen Katalysatoren, zur Reaktion gebracht werden müssen. Die Homogenisierung und gegebenenfalls Reaktion erfolgt zwischen 20 bis 100 °C in dafür geeigneten Mischaggregaten. Anschließend können der Lacklösung auch die üblichen Zuschlagstoffe, wie Pigmente, Füllstoffe, Verlaufmittel Glanzverbesserer, Entschäumer, Netzmittel und Stabilisatoren zugesetzt werden. In Sand- oder Kugelrührwerksmühlen werden diese Zuschlagstoffe abgerieben.

Die Einkomponenten-Einbrennlacke eignen sich für die Applikation, insbesondere auf Metalloberflächen, aber auch auf Gegenständen aus anderen Materialien, wie Glas oder Kunststoff. Die erfindungsgemäßen Lacke finden vor allem Anwendung in der Coil-Coating-Lackierung für witterungsbeständige Ein- und Zweischichtlackierungen.

Die Härtung der erfindungsgemäßen Lacke erfolgt je nach der Anwendung in einem Temperaturbereich von 120 bis 350 °C, vorzugsweise zwischen 140 bis 300 °C in einer Zeit von 30 Minuten bis 30 Sekunden. Die Lackfilme weisen hervorragende lacktechnische Eigenschaften, insbesondere hohe Flexibilität und Witterungsbeständigkeit auf.

## Beispiele

### A. Herstellung der total- oder partiell blockierten Polyisocyanate

#### Beispiel 1

Zu 51,14 Gewichtsteilen MPDI gelöst in 80 Gewichtsteilen Lösungsmittelgemisch wurden bei 80 °C portionsweise 68,86 Gewichtsteile ε-Caprolactam so zugegeben, daß die Reaktionstemperatur nicht über 120 °C anstieg. Nach beendeter ε-Caprolactamzugabe wurde noch weitere 2 Stunden bei 120 °C erhitzt.

NCO-Gehalt (latent) 12,6 Gew.-%

| | |
|---|---|
| NCO-Gehalt (frei) | < 0,3 Gew.-% |

Die Auslaufzeit im DIN-4-Becher bei 20 °C der 60 gewichtsprozentigen Lösung betrug :

| | | | |
|---|---|---|---|
| a) | n-Butylacetat/Xylol (techn.) | 1 : 3 | 11 sec |
| b) | EGA/Xylol (techn.) | 1 : 2 | 15 sec |
| c) | EGA/Solvesso® 150 | 1 : 2 | 21 sec |

Solvesso® 150 stellt ein Aromatengemisch (98 %) mit den Siedegrenzen 177 bis 206 °C der fa. ESSO dar und besitzt einen Taupunkt von mindestens 66 °C.

Beispiel 2

Zu 55,24 Gewichtsteilen MPDI gelöst in 80 Gewichtsteilen Lösungsmittelgemisch wurden bei 80 °C portionsweise 64,76 Gewichtsteile ε-Caprolactam so zugegeben, daß die Reaktionstemperatur nicht über 120 °C anstieg. Nach beendeter ε-Caprolactamzugabe wurde noch weitere 2 Stunden bei 120 °C erhitzt.

| | |
|---|---|
| NCO-Gehalt (latent) | 13,6 Gew.-% |
| NCO-Gehalt (frei) | 1,7 Gew.-% |

Die Auslaufzeit im DIN-4-Becher bei 20 °C der 60 gewichtsprozentigen Lösung betrug :

| | | | |
|---|---|---|---|
| a) | n-Butylacetat/Xylol (techn.) | 1 : 3 | 9 sec |
| b) | EGA/Xylol (techn.) | 1 : 2 | 12 sec |
| c) | EGA/Solvesso® 150 | 1 : 2 | 17 sec |

Beispiel 3

Zu 168 Gewichtsteilen MPDI/EBDI-Gemisch in 262,8 Gewichtsteilen Lösungsmittelgemisch wurden bei 80 °C portionsweise 226,2 Gewichtsteile ε-Caprolactam so zugegeben, daß die Reaktionstemperatur nicht über 120 °C stieg. Nach beendeter ε-Caprolactamzugabe wurde noch weitere 2 Stunden bei 120 °C erhitzt.

| | |
|---|---|
| NCO-Gehalt (latent) | 12,6 Gew.-% |
| NCO-Gehalt (frei) | < 0,3 Gew.-% |

Die Auslaufzeit im DIN-4-Becher bei 20 °C der 60 gewichtsprozentigen Lösung betrug :

| | | | |
|---|---|---|---|
| a) | n-Butylacetat/Xylol (techn.) | 1 : 3 | 10 sec |
| b) | EGA/Xylol (techn.) | 1 : 2 | 14 sec |
| c) | EGA/Solvesso® 150 | 1 : 2 | 18 sec |

Beispiel 4

Durchführung wie in Beispiel 3, jedoch mit 196,97 Gewichtsteilen ε-Caprolactam in 243,33 Gewichtsteilen Lösungsmittelgemisch.

| | |
|---|---|
| NCO-Gehalt (latent) | 13,6 Gew.-% |
| NCO-Gehalt (frei) | 1,8 Gew.-% |

Die Auslaufzeit im DIN-4-Becher bei 20 °C der 60 gewichtsprozentigen Lösung in

| | | | |
|---|---|---|---|
| a) | n-Butylacetat/Xylol (techn.) | 1 : 3 | 8 sec |
| b) | EGA/Xylol (techn.) | 1 : 2 | 12 sec |
| c) | EGA/Solvesso® 150 | 1 : 2 | 16 sec |

Beispiel 5

Zu 64,16 Gewichtsteilen MPDI in 80 Gewichtsteilen Lösungsmittelgemisch wurden bei 80 °C unter

intensivem Rühren 55,84 Gewichtsteile Acetonoxim portionsweise so zugegeben, daß die Temperatur des Reaktionsgemisches nicht über 100 °C stieg. Nach beendeter Acetonoximzugabe wurde das Reaktionsgemisch noch weitere 2 Stunden bei 100 °C erhitzt.

| | |
|---|---|
| NCO-Gehalt (latent) | 15,8 Gew.-% |
| NCO-Gehalt (frei) | < 0,3 Gew.-% |

Die Auslaufzeit im DIN-4-Becher bei 20 °C der 60 gewichtsprozentigen Lösung betrug :

| | | |
|---|---|---|
| a) n-Butylacetat/Xylol (techn.) | 1 : 3 | 10 sec |
| b) EGA/Xylol (techn.) | 1 : 2 | 15 sec |
| c) EGA/Solvesso® 150 | 1 : 2 | 20 sec |

## Beispiel 6

Durchführung wie in Beispiel 5, jedoch mit 52,4 Gewichtsteilen Acetonoxim in 77,71 Gewichtsteilen Lösungsmittelgemisch.

| | |
|---|---|
| NCO-Gehalt (latent) | 16,8 Gew.-% |
| NCO-Gehalt (frei) | 1,8 Gew.-% |

Die Auslaufzeit im DIN-4-Becher bei 20 °C der 60 gewichtsprozentigen Lösung betrug :

| | | |
|---|---|---|
| a) n-Butylacetat/Xylol (techn.) | 1 : 3 | 7 sec |
| b) EGA/Xylol (techn.) | 1 : 2 | 11 sec |
| c) EGA/Solvesso® 150 | 1 : 2 | 15 sec |

## Beispiel 7

Zu 168 Gewichtsteilen MPDI/EBDI-Gemisch in 209,5 Gewichtsteilen Lösungsmittelgemisch wurden bei 80 °C unter intensivem Rühren 146,2 Gewichtsteile Acetonoxim portionsweise so zugegeben, daß die Temperatur des Reaktionsgemisches nicht über 100 °C stieg. Nach beendeter Acetonoximzugabe wurde das Reaktionsgemisch noch weitere 2 Stunden bei 100 °C erhitzt.

| | |
|---|---|
| NCO-Gehalt (latent) | 15,84 Gew.-% |
| NCO-Gehalt (frei) | < 0,3 Gew.-% |

Die Auslaufzeit im DIN-4-Becher bei 20 °C der 60 gewichtsprozentigen Lösung betrug :

| | | |
|---|---|---|
| a) n-Butylacetat/Xylol (techn.) | 1 : 3 | 9 sec |
| b) EGA/Xylol (techn.) | 1 : 2 | 14 sec |
| c) EGA/Solvesso® 150 | 1 : 2 | 20 sec |

## Beispiel 8

Durchführung wie in Beispiel 7, jedoch mit 130,5 Gewichtsteilen Acetonoxim in 199 Gewichtsteilen Lösungsmittelgemisch.

| | |
|---|---|
| NCO-Gehalt (latent) | 16,77 Gew.-% |
| NCO-Gehalt (frei) | 1,83 Gew.-% |

Die Auslaufzeit im DIN-4-Becher bei 20 °C der 60 gewichtsprozentigen Lösung betrug :

| | | |
|---|---|---|
| a) n-Butylacetat/Xylol (techn.) | 1 : 3 | 7 sec |
| b) EGA/Xylol (techn.) | 1 : 2 | 10 sec |
| c) EGA/Solvesso® 150 | 1 : 2 | 16 sec |

## Vergleichsbeispiele mit HDI

## Beispiel 9

Durchführung wie in den Beispielen 3 und 4 (Caprolactam) bzw. 7 und 8 (Acetonoxim), jedoch mit HDI. Die blockierten HDI-Addukte fielen bereits während bzw. kurze Zeit nach der Herstellung aus, so daß keine Viskositäten im DIN-4-Becher bei 20 °C ermittelt werden konnten.

Im Fall der partiell blockierten HDI-Addukte wurde die Umsetzung mit dem Polyester in der Wärme (80 bis 100 °C) ausgeführt, um zu versuchen, über die OH/NCO-Vorreaktion Lacklösungen mit besserer Verträglichkeit einzustellen. Die Klarlacklösungen sowie die entsprechenden pigmentierten Lacklösungen kristallisierten über Nacht aus ; es war also keine Lagerstabilität vorhanden. Die Lacklösungen konnten nur bei 60 bis 80 °C in Lösung gehalten werden, so daß die Ermittlung der lacktechnischen Kenndaten nicht erfolgte.

B. Herstellung der erfindungsgemäßen Polyester

Beispiel 1

7 Mol (1 162 g) Isophthalsäure, 2 Mol (268 g) Trimethylolpropan, 4 Mol (472 g) Hexandiol-1,6 und 2 Mol (408 g) Hydroxypivalinsäureneopentylglykolester wurden in einem 4-1-Glaskolben zur Veresterung gebracht. Als Veresterungskatalysator wurden 0,05 Gewichtsprozent Di-n-butylzinn-oxid verwendet. Bei ca. 190 °C kam es zur ersten Wasserabspaltung. Innerhalb von 6 bis 8 Stunden wurde die Temperatur auf 220 °C erhöht. Die Veresterung wurde innerhalb 6 Stunden bei 220 °C zu Ende geführt. Der Polyester wurde dann auf 200 °C abgekühlt und durch anlegen von Vakuum (19,995 hPa bis 39,99 hPa) innerhalb 30 bis 45 Minuten weitgehend von flüchtigen Anteilen befreit. Während der gesamten Reaktion wurde ein schwacher $N_2$-Strom durch das Reaktionsgemisch geleitet.

Physikalische Kenndaten

| | |
|---|---|
| OH-Zahl : | 90 bis 106 mg KOH/g |
| Säurezahl : | < 2 mg KOH/g |
| Glasumwandlungstemperatur (DTA) : | 0 bis + 10 °C |

Die Auslaufzeit bestimmt mit dem DIN-4-Becher bei 20 °C der 60 gewichtsprozentigen Lösung ergab :

| | | | |
|---|---|---|---|
| a) | n-Butylacetat/Xylol (techn.) | 1 : 3 | 219 sec |
| b) | EGA/Xylol (techn.) | 1 : 2 | 340 sec |
| c) | EGA/Solvesso® 150 | 1 : 2 | 652 sec |

Beispiel 2

7 Mol (1 162 g) Isophthalsäure, 5 Mol (590 g) Hexandiol-1,6, 1 Mol (104 g) Neopentylglykol und 2 Mol (268 g) Trimethylolpropan wurden wie in Beispiel B.1 beschrieben bis zu einer Säurezahl < 2 mg KOH/g verestert.

Physikalische Daten

| | |
|---|---|
| OH-Zahl : | 100 bis 105 mg KOH/g |
| Säurezahl : | < 2 mg KOH/g |
| Glasumwandlungstemperatur (DTA) : | + 2 bis + 12 °C |

Die Auslaufzeit im DIN-4-Becher bei 20 °C der 60 gewichtsprozentigen Lösung ergibt in :

| | | | |
|---|---|---|---|
| a) | n-Butylacetat/Xylol (techn.) | 1 : 3 | 597 sec |
| b) | EGA/Xylol (techn.) | 1 : 2 | 704 sec |
| c) | EGA/Solvesso® 150 | 1 : 2 | 1 205 sec |

Beispiel 3 (Vergleich)

7 Mol (1 162 g) Isophthalsäure, 2 Mol (268 g) Trimethylolpropan und 6 Mol (708 g) Hexandiol-1,6 wurden, wie in Beispiel B.1 beschrieben, bis zu einer Säurezahl < 2 mg KOH/g verestert.

Physikalische Kenndaten

| | |
|---|---|
| OH-Zahl : | 100 bis 105 mg KOH/g |
| Säurezahl : | < 2 mg KOH/g |
| Glasumwandlungstemperatur (DTA) : | + 4 bis + 12 °C |

Die Auslaufzeit, bestimmt mit dem DIN-4-Becher bei 20 °C der 60 gewichtsprozentigen Lösung, ergab :

| | | |
|---|---|---|
| a) n-Butylacetat/Xylol (techn.) | 1 : 3 | 525 sec |
| b) EGA/Xylol (techn.) | 1 : 2 | 657 sec |
| c) EGA/Solvesso® 150 | 1 : 2 | 1 133 sec |

C. Polyurethan-Einkomponenten-Einbrennlacke

Für die Formulierungen der pigmentierten Lacksysteme wurden sowohl die beschriebenen 60 gewichtsprozentigen Isocyanatlösungen als auch die 60 gewichtsprozentigen Polyesterlösungen verwendet.

Beispiel 1

45,16 Gewichtsprozent Polyesterlösung gemäß B.1 wurden mit 17,34 Gewichtsprozent blockierter Isocyanatlösung gemäß A.1 und 7 Gewichtsprozent Lösungsmittel gemischt und anschließend mit 29,4 Gewichtsprozent Weißpigment ($TiO_2$), 0,1 Gewichtsprozent Verlaufmittel (Siliconöl der Fa. Bayer AG), 1 Gewichtsprozent Entschäumer (Bykspezial der Fa. Byk-Mallinkrodt) in der Kugelrührwerksmühle abgerieben.

Die Applikation erfolgte auf 1 mm Stahl- und Aluminiumbleche und die Aushärtung wurde in einem Umlufttrockenschrank durchgeführt. Härtungstemperaturen betrugen 150 bis 300 °C.

Die Abkürzungen in den folgenden Tabellen bedeuten :

| | | |
|---|---|---|
| HK | = Härte n. König (in sec) | (DIN 53 157) |
| HB | = Härte n. Buchholz | (DIN 53 153) |
| ET | = Tiefung n. Erichsen (in mm) | (DIN 53 156) |
| GS | = Gitterschnittprüfung | (DIN 53 151) |
| GG 20 °∢ und GG 60 °∢ | = Messung des Glanzes n. Gardner | (ASTM-D 523) |
| Imp. rev. | = Impact reverse (in g·m) | |

(Siehe Tabelle Seite 8 f.)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T- Bend-Test | Bleist.-härte | GS | GG 20 °% | GG 60 °% |
| 1,5 / 300 | 171 | 125 | >10 | >944,64 | 0 | H - 2H | 0 | 83 | 90 |
| 7 / 200 | 168 | 111 | >10 | >944,64 | 0 - 1 | H | 0 | 84 | 92 |
| 10 / 200 | 170 | 125 | >10 | >944,64 | 0 | H - 2H | 0 | 82 | 91 |
| 20 / 180 | 165 | 111 | >10 | >944,64 | 0 - 1 | H | 0 | 85 | 90 |
| 30 / 170 | 166 | 111 | >10 | >944,64 | 0 - 1 | H | 0 | 82 | 92 |

Die Schichtdicke der Lackfilme betrug 25 bis 30 µm.
Die Lagerstabilität der erfindungsgemäßen Lacklösungen war nach neunmonatiger. Lagerung sowohl bei Raumtemperatur als auch bei + 5 °C gegeben.

Beispiel 2

Die Herstellung und Applikation sowie Härtung des Lackes erfolgte gemäß C.1.

Rezeptur :

46,11 Gew.-% Polyesterlösung gemäß B.1
16,39 Gew.-% Vernetzerlösung gemäß A.2
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 9 f.)

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist.-härte | GS | GG 20 °% | GG 60 °% |
| 1,5 / 300 | 173 | 125 | >10 | >944,64 | 0 | H - 2H | 0 | 81 | 92 |
| 7 / 200 | 169 | 111 | >10 | >944,64 | 0 | H | 0 | 83 | 90 |
| 10 / 200 | 174 | 125 | >10 | >944,64 | 0 | H - 2H | 0 | 85 | 93 |
| 20 / 180 | 168 | 111 | >10 | >944,64 | 0 - 1 | H | 0 | 84 | 91 |
| 30 / 170 | 166 | 111 | >10 | >944,64 | 0 | H | 0 | 83 | 90 |

Die Schichtdicke der Lackfilme betrug 25 bis 30 µm.

## Beispiel 3

Die Herstellung und Applikation sowie Härtung des Lackes erfolgte gemäß C.1.

Rezeptur :

45,16 Gew.-% Polyesterlösung gemäß B.1
17,34 Gew.-% Vernetzerlösung gemäß A.3
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 10 f.)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist.-härte | GS | GG 20 °% | GG 60 °% |
| 1,5 / 300 | 174 | 125 | >10 | >944,64 | 0 | H - 2H | 0 | 85 | 92 |
| 7 / 200 | 168 | 111 | >10 | >944,64 | 0 | H | 0 | 81 | 89 |
| 10 / 200 | 172 | 125 | >10 | >944,64 | 0 | H - 2H | 0 | 84 | 93 |
| 20 / 180 | 170 | 111 | >10 | >944,64 | 0 - 1 | H - 2H | 0 | 83 | 91 |
| 30 / 170 | 166 | 111 | >10 | >944,64 | 0 - 1 | H | 0 | 83 | 90 |

Die Schichtdicke der Lackfilme betrug 25 bis 30 µm.

## Beispiel 4

Die Herstellung und Applikation sowie Härtung des Lackes erfolgte gemäß C.1.

Rezeptur :

46,16 Gew.-% Polyesterlösung gemäß B.1
16,39 Gew.-% Vernetzerlösung gemäß A.4
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 11 f.)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist.-härte | GS | GG 20 °% | GG 60 °% |
| 1,5 / 300 | 170 | 111 | >10 | >944,64 | 0 - 1 | H | 0 | 81 | 92 |
| 7 / 200 | 172 | 125 | >10 | >944,64 | 0 | H - 2H | 0 | 84 | 94 |
| 10 / 200 | 175 | 125 | >10 | >944,64 | 0 | H - 2H | 0 | 83 | 91 |
| 20 / 180 | 168 | 125 | >10 | >944,64 | 0 - 1 | H | 0 | 80 | 93 |
| 30 / 170 | 169 | 111 | >10 | >944,64 | 0 - 1 | H | 0 | 82 | 91 |

Die Schichtdicke der Lackfilme betrug 25 bis 30 µm.

## Beispiel 5

Die Herstellung und Applikation sowie Härtung des Lackes erfolgte gemäß C.1.

Rezeptur :

48,51 Gew.-% Polyesterlösung gemäß B.1
13,94 Gew.-% Vernetzerlösung gemäß A.6
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 12 f.)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 20 ° ∢ | GG 60 ° ∢ |
| 7 / 200 | 170 | 111 | > 10 | >944,64 | 0 | H - 2H | 0 | 82 | 91 |
| 10 / 180 | 169 | 111 | > 10 | >944,64 | 0 | H | 0 | 84 | 91 |
| 14 / 170 | 168 | 111 | > 10 | >944,64 | 0 | H | 0 | 81 | 90 |
| 18 / 160 | 167 | 100 | > 10 | >944,64 | 0 | H | 0 | 80 | 90 |
| 23 / 150 | 166 | 100 | > 10 | >944,64 | 0 - 1 | H | 0 | 83 | 91 |

Die Schichtdicke der Lackfilme betrug 25 bis 30 µm.

Beispiel 6

Die Herstellung und Applikation sowie Härtung des Lackes erfolgte gemäß C.1.

Rezeptur :

48,51 Gew.-% Polyesterlösung gemäß B.1
13,94 Gew.-% Vernetzerlösung gemäß A.8
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 13 f.)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 20 ° ≮ | GG 60 ° ≮ |
| 7 / 200 | 169 | 111 | >10 | >944,64 | 0 | H | 0 | 81 | 91 |
| 10 / 180 | 170 | 111 | >10 | >944,64 | 0 | H - 2H | 0 | 82 | 91 |
| 14 / 170 | 168 | 111 | >10 | >944,64 | 0 | H | 0 | 82 | 91 |
| 18 / 160 | 166 | 100 | >10 | >944,64 | 0 | H | 0 | 83 | 91 |
| 23 / 150 | 165 | 100 | >10 | >944,64 | 0 - 1 | H | 0 | 82 | 91 |

Beispiel 7

Die Herstellung und Applikation sowie Härtung des Lackes erfolgte gemäß C.1.

Rezeptur :

46,99 Gew.-% Polyesterlösung gemäß B.2
15,51 Gew.-% Vernetzerlösung gemäß A.4.
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 14 f.)

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend Test | Bleist.-härte | GS | GG 20 ° % | GG 60 ° % |
| 1,5 / 300 | 165 | 100 | >10 | >944,64 | 0 | H | 0 | 80 | 90 |
| 7 / 200 | 164 | 100 | >10 | >944,64 | 0 | H | 0 | 81 | 90 |
| 10 / 200 | 167 | 111 | >10 | >944,64 | 0 | H | 0 | 80 | 91 |
| 20 / 180 | 163 | 100 | >10 | >944,64 | 0 | F - H | 0 | 83 | 90 |
| 30 / 170 | 163 | 100 | >10 | >944,64 | 0 | F - H | 0 | 81 | 91 |

Die Schichtdicke der Lackfilme betrug 25 bis 30 µm.

## Beispiel 8

Die Herstellung und Applikation sowie Härtung des Lackes erfolgte gemäß C.1.

Rezeptur :

49,24 Gew.-% Polyesterlösung gemäß B.2
13,26 Gew.-% Vernetzerlösung gemäß A.8
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 15 f.)

| Härtungsbedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 20° % | GG 20° % |
| 7 / 200 | 164 | 100 | >10 | >944,64 | 0 | H | 0 | 78 | 91 |
| 10 / 180 | 163 | 100 | >10 | >944,64 | 0 | H | 0 | 79 | 93 |
| 14 / 170 | 161 | 100 | >10 | >944,64 | 0 | F - H | 0 | 81 | 90 |
| 18 / 160 | 163 | 100 | >10 | >944,64 | 0 | H | 0 | 80 | 92 |
| 23 / 150 | 162 | 100 | >10 | >944,64 | 0 | F - H | 0 | 80 | 92 |

Die Schichtdicke der Lackfilme betrug 25 bis 30 µm.

## Beispiel 9

Die Herstellung und Applikation sowie Härtung des Lackes erfolgte gemäß C.1.

Rezeptur :

46,06 Gew.-% Polyesterlösung gemäß B.2
16,44 Gew.-% Vernetzerlösung gemäß A.3
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 16 f.)

| Härtungsbedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist.-härte | GS | GG 20 °% | GG 60 °% |
| 1,5 / 300 | 164 | 100 | > 10 | >944,64 | 0 | F - H | 0 | 81 | 93 |
| 7 / 200 | 162 | 100 | > 10 | >944,64 | 0 - 1 | F - H | 0 | 78 | 90 |
| 10 / 200 | 165 | 111 | > 10 | >944,64 | 0 | H | 0 | 82 | 91 |
| 20 / 180 | 163 | 100 | > 10 | >944,64 | 0 | H | 0 | 79 | 90 |
| 30 / 170 | 162 | 100 | > 10 | >944,64 | 0 - 1 | F - H | 0 | 81 | 91 |

Die Schichtdicke der Lackfilme betrug 25 bis 30 µm.

Beispiel 10

Die Herstellung und Applikation sowie Härtung des Lackes erfolgte gemäß C.1.

Rezeptur :

48,69 Gew.-% Polyesterlösung gemäß B.2
13,8 Gew.-% Vernetzerlösung gemäß A.7
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 17 f.)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 20 ° ∡ | GG 60 ° ∡ |
| 7 / 200 | 165 | 111 | >10 | >944,64 | 0 | H | 0 | 79 | 90 |
| 10 / 180 | 164 | 100 | >10 | >944,64 | 0 | H | 0 | 81 | 94 |
| 14 / 170 | 162 | 100 | >10 | >944,64 | 0 | F - H | 0 | 78 | 89 |
| 18 / 160 | 162 | 100 | >10 | >944,64 | 0 | F - H | 0 | 80 | 92 |
| 23 / 150 | 160 | 100 | >10 | >944,64 | 0 - 1 | F - H | 0 | 80 | 91 |

Die Schichtdicke der Lackfilme betrug 25 bis 30 µm.

## Beispiel 11 — Vergleich

Die Herstellung und Applikation sowie Härtung des Lackes erfolgte gemäß C.1.

Rezeptur :

46,99 Gew.-% Polyesterlösung gemäß B.3
15,51 Gew.-% Vernetzerlösung gemäß A.4
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 18 f.)

| Härtungs-bedingungen | Mechanische Kenndaten | | | | | | | | |
|---|---|---|---|---|---|---|---|---|---|
| Zeit / Temp. min. / °C | HK | HB | ET | Imp. rev. | T-Bend-Test | Bleist.-härte | GS | GG 20 °∢ | GG 60 °∢ |
| 1,5 / 300 | 125 | 91 | ≥10 | >944,64 | 0 | F | 0 | 77 | 90 |
| 7 / 200 | 120 | 91 | ≥10 | >944,64 | 0 | F | 0 | 79 | 91 |
| 10 / 200 | 124 | 91 | ≥10 | >944,64 | 0 | F | 0 | 79 | 93 |
| 20 / 180 | 118 | 83 | ≥10 | >944,64 | 0 | HB | 0 | 76 | 89 |
| 30 / 170 | 115 | 83 | ≥10 | >944,64 | 0 | HB | 0 | 75 | 89 |

Die Schichtdicke der Lackfilme betrug 25 bis 30 µm.

Beispiel 12 — Vergleich

Die Herstellung und Applikation sowie Härtung des Lackes erfolgte gemäß C.1.

Rezeptur:

49,29 Gew.-% Polyesterlösung gemäß B.3
13,21 Gew.-% Vernetzerlösung gemäß A.8
7,0 Gew.-% Lösungsmittelgemisch gemäß der eingesetzten Lacklösung
29,4 Gew.-% Weißpigment ($TiO_2$)
1,0 Gew.-% Entschäumer (Byk-Spezial)
0,1 Gew.-% Verlaufmittel (Siliconöl OL)

(Siehe Tabelle Seite 19 f.)

| Härtungs-bedingungen | Mechanische Kenndaten | | | | | | | | |
|---|---|---|---|---|---|---|---|---|---|
| Zeit / Temp. min / °C | HK | HB | ET | Imp. rev. | T-Bend-Test | Bleist.-härte | GS | GG 20° ∢ | GG 60° ∢ |
| 7 / 200 | 120 | 100 | >10 | >944,64 | 0 | F | 0 | 80 | 95 |
| 10 / 180 | 122 | 100 | >10 | >944,64 | 0 | F | 0 | 77 | 93 |
| 14 / 170 | 118 | 91 | >10 | >944,64 | 0 | HB - F | 0 | 81 | 94 |
| 18 / 160 | 116 | 91 | >10 | >944,64 | 0 | HB | 0 | 79 | 90 |
| 23 / 150 | 112 | 83 | >10 | >944,64 | 0 | HB | 0 | 76 | 94 |

*Die Schichtdicke der Lackfilme betrug 25 bis 30 µm.

**Patentansprüche**

1. Einkomponenten-Einbrennlacke aus hydroxylhaltigen Polyestern und Polyisocyanaten und gegebenenfalls Zuschlagstoffen in herkömmlichen Lacklösungsmitteln, dadurch gekennzeichnet, daß der hydroxylgruppenhaltige Polyester auf Basis von überwiegend aromatischen Dicarbonsäuren, Diolen und Triolen eine Glasumwandlungstemperatur von < 20 und > — 25 °C besitzt, und die Polyisocyanatkomponente aus total oder partiell mittels ε-Caprolactam oder Acetonoxim blockierten 2-Methyl-1,5-diisocyanatopentan oder einem Gemisch aus diesem und 2-Ethyl-1,4-diisocyanatobutan gemäß folgender Formeln I und II

$$O{=}C{=}N{-}CH_2{-}\underset{CH_3}{CH}{-}CH_2{-}CH_2{-}CH_2{-}N{=}C{=}O \quad (MPDI) \qquad (I)$$

$$O{=}C{=}N{-}CH_2{-}CH_2{-}\underset{C_2H_5}{CH}{-}CH_2{-}N{=}C{=}O \quad (EBDI) \qquad (II)$$

besteht, wobei das Diisocyanat-Gemisch aus I und II die Zusammensetzung :

88 bis 99 Gew.-% 2-Methyl-1,5-diisocyanatopentan
12 bis 1 Gew.-% 2-Ethyl-1,4-diisocyanatobutan aufweist

und der freie NCO-Gehalt bis 10 Gewichtsprozent, vorzugsweise bis 5 Gewichtsprozent, beträgt.

2. Einkomponenten-Einbrennlacke nach Anspruch 1, dadurch gekennzeichnet, daß der hydroxylgruppenhaltige Polyester als Diole Neopentylglykol und/oder Hydroxypivalinsäureneopentylglykolester als Hartsegment enthält.

3. Einkomponenten-Einbrennlacke nach Anspruch 1, dadurch gekennzeichnet, daß das Bindemittelgemisch zu

50 bis 90 Gew.-% aus dem hydroxylhaltigen Polyester, zu
50 bis 10 Gew.-% aus total oder partiell blockiertem MPDI bzw. MPDI/EBDI-Gemisch besteht.

**Claims**

1. One-component stoving varnishes consisting of hydroxyl-containing polyesters and polyisocyanates and, optionally, additives, in conventional paint solvents, characterized in that the polyester, containing hydroxyl groups and based on predominantly aromatic dicarboxylic acids, diols and triols, has a glass transition temperature of < 20 and > — 25 °C and the polyisocyanate component consists of totally or partially ε-caprolactam- or acetone oxime-blocked 2-methyl-1,5-diisocyanatopentane or a mixture thereof and 2-ethyl-1,4-diisocyanatobutane in accordance with the following formulae I and II

$$O=C=N-CH_2-\underset{\displaystyle CH_3}{\underset{|}{CH}}-CH_2-CH_2-CH_2-N=C=O \quad (MPDI) \qquad (I)$$

$$O=C=N-CH_2-CH_2-\underset{\displaystyle C_2H_5}{\underset{|}{CH}}-CH_2-N=C=O \quad (EBDI) \qquad (II)$$

the diisocyanate mixture of I and II having the composition :

88 to 99 % by weight of 2-methyl-1,5-diisocyanatopentane and
12 to  1 % by weight of 2-ethyl-1,4-diisocyanatobutane

and the free NCO content being up to 10 % by weight or preferably up to 5 % by weight.

2. One-component stoving varnishes according to Claim 1, characterized in that the polyester containing hydroxyl.

3. One-component stoving varnishes according to Claim 1, characterized in that the binder mixture consists of

50 to 90 % by weight of the hydroxyl-containing polyester and
50 to 10 % by weight of a totally or partially blocked MPDI or MPDI/EBDI mixture.

**Revendications**

1. Vernis à sécher à l'étuve à un seul composant, de polyesters contenant des groupes hydroxyl et de polyisocyanates et éventuellement des additifs dans des solvants pour vernis de l'art antérieur, caractérisé en ce que le polyester contenant des groupes hydroxyl à base d'une proportion dominante d'acides dicarboxyliques aromatiques, de diols et de triols présente une température de passage à l'état vitreux qui ne soit pas supérieure à 20, ni inférieure à — 25 °C et les composants polyisocyanate sont constitués de 2-méthyl-1,5-diisocyanatopentane ou d'un mélange de ce dernier et de 3-éthyl-1,4-diisocyanatobutane suivant les formules I et II ci-après :

$$O=C=N-CH_2-\underset{\displaystyle CH_3}{\underset{|}{CH}}-CH_2-CH_2-CH_2-N=C=O \quad (MPDI) \qquad (I)$$

$$O=C=N-CH_2-CH_2-\underset{\displaystyle C_2H_5}{\underset{|}{CH}}-CH_2-N=C=O \quad (EBDI) \qquad (II)$$

totalement ou partiellement bloqués au moyen d'ε-caprolactame ou d'acétonoxime, le mélange des diisocyanates I et II présentant la composition suivante :

88 à 99 % en poids de 2-méthyl-1,5-diisocyanatopentane
12 à  1 % en poids de 2-éthyl-1,4-diisocyanatobutane

et la teneur en NCO libres pouvant se monter jusqu'à 10 % en poids ou mieux à 5 % en poids.

2. Vernis suivant la revendication 1, caractérisé en ce que le polyester contenant des groupes hydroxyl contient, comme diol, du néopentylglycol, et/ou du néopentylglycolester de l'acide hydroxypavalique, comme noyau dur.

3. Vernis suivant la revendication 1, caractérisé en ce que le mélange formant le liant est composé de

50 à 90 % en poids de polyester contenant de l'hydroxyl,
50 à 10 % en poids d'un mélange total ou partiellement bloqué de MPDI ou MPDI/EBDI.